**Europäisches Patentamt**

**European Patent Office**

**Office européen des brevets**

(19)

(11) Numéro de publication : **0 497 698 A1**

# (12) DEMANDE DE BREVET EUROPEEN

(21) Numéro de dépôt : **92400238.9**

(51) Int. Cl.⁵ : **C01B 25/37, C01B 25/45**

(22) Date de dépôt : **30.01.92**

(30) Priorité : **31.01.91 FR 9101106**

(43) Date de publication de la demande :
**05.08.92 Bulletin 92/32**

(84) Etats contractants désignés :
**BE DE GB IT NL**

(71) Demandeur : **SOCIETE NATIONALE ELF AQUITAINE**
**Tour Elf, 2, Place de la Coupole, La Défense 6**
**F-92400 Courbevoie (FR)**

(72) Inventeur : **Merrouche, Abdallah**
**19, rue Hubner**
**F-68100 Mulhouse (FR)**
Inventeur : **Patarin, Joel**
**13, rue Eugène Delacroix**
**F-68100 Mulhouse (FR)**
Inventeur : **Kessler, Henri**
**17, rue de la Forêt**
**F-68270 Wittenheim (FR)**
Inventeur : **Anglerot, Didier**
**46bis, chemin Salié**
**F-64140 Lons (FR)**

(74) Mandataire : **Boillot, Marc**
**SOCIETE NATIONALE ELF AQUITAINE**
**(PRODUCTION), Dept. Propriété Industrielle,**
**Tour Elf**
**F-92078 Paris la Défense Cédex 45 (FR)**

(54) **Solides microporeux synthétiques renfermant du gallium et du phosphore, leur synthèse et leur utilisation comme catalyseurs et adsorbants.**

(57)    Cette invention concerne un solide microporeux synthétique cristallisé renfermant du gallium et du phosphore dont la structure cristalline est du type LTA.
    Après calcination à une température supérieure à 200°C, le solide obtenu peut être utilisé comme catalyseur de transformation d'hydrocarbures ou adsorbant.

EP 0 497 698 A1

La présente invention concerne des solides microporeux synthétiques renfermant du gallium et du phosphore, dont la structure cristalline est du type LTA, leur synthèse et leur utilisation comme catalyseurs et adsorbants.

Deux types de phosphates de gallium cristallisés microporeux, présentant des propriétés de tamis moléculaires, ont été décrits dans le brevet européen 226219(1987). Ces produits correspondent à la formule générale

$$mR : Ga_2 O_3 : (1\pm0,2)P_2O_5 : nH_2O$$

où R représente un agent structurant organique, amine ou cation ammonium quaternaire, occlus dans les canaux de la structure, m et n représentent le nombre de moles de R et de $H_2O$ respectivement, par mole de $Ga_2O_3$. Le rapport molaire Ga/P de ces matériaux est pratiquement égal à 1. La charge positive $PO_2^+$ associée au phosphore des tétraèdres est équilibrée par $GaO_2^-$ associée à la présence du gallium dans les tétraèdres.

Une fois calcinés, pour éliminer l'espèce organique, les deux phosphates de gallium sont utiles comme adsorbants sélectifs et comme catalyseurs.

D'autres phosphates de gallium cristallisés microporeux ont été décrits dans les articles "Some gallium phosphate frameworks related to the aluminium phosphate molecular sieves : X-ray structural characterization of $(Pr^iNH_3) Ga_4 (PO_4)_4 OH.H_2O$ par J.B. Parise, J. Chem. Soc, Chem. Comm, 1985, pages 606-607, et "Studies on the syntheses and structures of a novel family of microporous gallophosphates" par Feng Shouhua et Xu Ruren, Chemical Journal of Chinese Universities, 1987, Vol.8, pages 867-868.

Les structures zéolithiques sont inventoriées dans l'"Atlas of Zeolite structure types" de W.M.MEIER et D.H. OLSON (Butterworths 1987). Les différentes structures sont identifiées par un code de trois lettres. Les zéolithes du type LTA (pour Linde Type A) sont connues depuis 1953.

Cette structure comporte un assemblage tridimensionnel de tétraèdres $TO_4$ (T=Si, Al,...) à sommets oxygénés communs. L'édifice résultant délimite des canaux dont le diamètre est de 45nm environ.

La synthèse de la zéolithe A de type structural LTA et de formule $Na_{12} Al_{12} Si_{12} O_{48}$, $nH_2O$ a été décrite dans le brevet US 2882243(1953).

Par ailleurs des silicoaluminophosphates de structure LTA ont été décrits dans les brevets US 3355246(1967), 3791964(1974) et 4440871(1984).

Par contre on ne connaît aucun gallophosphate du type LTA.

Cette invention concerne un solide microporeux synthétique cristallisé, renfermant du gallium et du phosphore caractérisé en ce que dans sa forme brute de synthèse anhydre il correspond à la formule générale :

$$S_s (Ga_g P_p X_x Y_y) O_2 F_f$$

où

    – S représente l'agent structurant organique

    – X représente un élément trivalent

    – Y représente un élément tétravalent

    – s, g, p, x, y et f représentent les nombres de moles pour deux moles d'atomes oxygène. Leurs valeurs sont :

        $0,01 \leqq s \leqq 0,2$

        $0,1 \leqq g \leqq 0,5$

        $0,2 \leqq p \leqq 0,5$

        $0 \leqq x \leqq 0,4$

        $0 \leqq y \leqq 0,3$

        $0,01 \leqq f \leqq 0,2$

        avec $g + p + x + y = 1$

et en ce que la structure cristalline est du type LTA.

Le diagramme de diffraction des rayons X des solides microporeux selon l'invention comporte au moins les valeurs de $d_{hkl}$ données dans le tableau I.

Les valeurs préférentielles pour s, g, p, x, y et f sont :

        $0,05 \leqq s \leqq 0,17$

        $0,35 \leqq g \leqq 0,5$

        $0,4 \leqq p \leqq 0,5$

        $0 \leqq x \leqq 0,1$

        $0 \leqq y \leqq 0,1$

        $0,12 \leqq f \leqq 0,17$

L'élément trivalent est de préférence l'aluminium.

L'élément tétravalent est le silicium, le germanium ou le titane, de préférence le silicium.

L'agent structurant organique S est en général une amine, de préférence une amine secondaire.

Le solide microporeux brut de synthèse contient occlus dans ses cavités l'agent structurant organique. Ce dernier est associé d'une part au fluorure, et d'autre part joue le rôle de cation de compensation de la charge négative de la charpente résultant de l'incorporation de l'élément tétravalent, tel que le silicium dans les tétraèdres. Le solide peut également contenir de l'eau d'hydratation et des cations de compensation minéraux si les cations de l'agent structurant organique, ne sont pas en nombre suffisant. L'eau d'hydratation représente entre 0 et 0,5 moles d'eau par unité formulaire $S_s (Ga_g P_p X_x Y_y)O_2 F_f$. La déshydratation par chauffage à 150°C environ, ne provoque pas en général le départ de l'agent structurant organique.

La calcination de la forme brute de synthèse à une température suffisante pour éliminer au moins une partie de l'agent structurant conduit à un solide ayant des pores ou cavités vides. La température de calcination est en général supérieure à 200°C, elle est comprise de préférence entre 350 et 450°C.

Le solide obtenu par calcination est stable au moins jusqu'à 450°C et sa capacité d'adsorption est de 0,148g de n-hexane par gramme de solide calciné, ce qui correspond à une porosité au moins égale à $0,22 cm^3 g^{-1}$.

Le procédé de synthèse du solide microporeux consiste à réaliser, un mélange réactionnel renfermant de l'eau, une source de gallium, une source de phosphore, un agent structurant organique, chauffer ce mélange à une température égale ou supérieure à 40°C sous pression autogène pendant une durée suffisante pour effectuer la cristallisation puis séparer le solide cristallisé. Le procédé est caractérisé en ce que le mélange réactionnel renferme une source d'anions fluorure.

Le mélange réactionnel peut également renfermer des sources d'un élément trivalent, X, et/ou des sources d'un élément tétravalent Y.

La composition molaire rapportée à $Ga_2O_3$ du mélange réactionnel est la suivante :
$s'S : Ga_2O_3 : p'P_2O_5 : x'X_2O_3 : y'YO_2 : f'F : hH_2O$ où
– s' varie entre 1 et 10 et de préférence entre 5 et 10
– p' varie entre 0,1 et 1 et de préférence entre 0,5 et 1
– x' varie entre 0 et 1 et de préférence entre 0 et 0,5
– y' varie entre 0 et 1,5 et de préférence entre 0 et 1
– f' varie entre 0,1 et 4 et de préférence entre 1 et 3
– h varie entre 10 et 500 et de préférence entre 30 et 100.

Parmi les amines secondaires, les dialkylamines conviennent tout particulièrement. Les chaînes alkyles comportent en général 2 à 4 atomes, de préférence 3 atomes de carbone.

Les anions fluorures peuvent être introduits sous forme d'acide fluorhydrique ou ses sels. Ces sels sont formés avec des métaux alcalins, l'ammonium ou de préférence avec l'agent structurant organique. Dans ce dernier cas, le sel est avantageusement formé dans le mélange réactionnel entre l'agent structurant et l'acide fluorhydrique.

Il est également possible d'utiliser des composés hydrolysables pouvant libérer des anions fluorures dans l'eau, comme le fluorosilicate d'ammonium $(NH_4)_2 SiF_6$ ou de sodium $Na_2 SiF_6$ et de préférence le tétrafluorure de silicium $SiF_4$.

On utilise avantageusement l'acide fluorhydrique.

Parmi les sources de gallium on peut citer les oxydes et hydroxydes de gallium, comme GaOOH, les alkoxydes de gallium de formule $Ga(OR_1)_3$ où $R_1$ est un radical alkyle, les sels de gallium comme le fluorure de gallium, le phosphate de gallium ou le sulfate de gallium.

Le sulfate de gallium est utilisé de préférence.

La source de phosphore préférée est l'acide phosphorique $H_3PO_4$, mais ses sels et esters comme les phosphates alcalins, les phosphates de gallium et d'élément trivalent réactifs, ou des phosphates d'alkyle conviennent aussi.

L'élément trivalent est en général l'aluminium.

Parmi les sources d'aluminium, on peut citer les oxydes et hydroxydes, comme l'hydroxyde d'aluminium $Al(OH)_3$, la boehmite Al OOH ou la pseudoboehmite, une alumine réactive de préférence, comme l'alumine gamma, les sels tels que le fluorure d'aluminium, le phosphate d'aluminium, le sulfate d'aluminium ou l'aluminate de sodium, de même que les alkoxydes $Al(OR_1)_3$ où $R_1$ est un radical alkyle.

Le sulfate d'aluminium est utilisé de préférence.

L'élément tétravalent est en général le silicium.

De nombreuses sources de silicium peuvent être employées.

Ainsi on peut utiliser les oxydes sous forme d'hydrogel, d'aérogel ou de suspension colloïdale, les oxydes de précipitation ou provenant de l'hydrolyse d'esters tels que l'orthosilicate d'éthyle $Si(OEt)_4$ ou de l'hydrolyse de complexes comme le fluorosilicate d'ammonium $(NH_4)_2 SiF_6$ ou de sodium $Na_2 SiF_6$.

Une suspension colloïdale de silice est employée de préférence.

Les éléments constitutifs de la charpente tels que le gallium, le phosphore, les éléments trivalents comme Al, et les éléments tétravalents comme Si, peuvent être présents dans des sources combinées telles que les

EP 0 497 698 A1

gallosilicates et aluminosilicates cristallisés ou de préférence dans des gels de silice-alumine ou de silice-oxyde de gallium amorphes.

Le pH du mélange réactionnel est avantageusement compris entre 2 et 8 et de préférence entre 3 et 8.

Le pH peut être ajusté par l'addition d'acides, comme l'acide chlorhydrique, sulfurique ou acétique, de sels acides comme l'hydrogénofluorure d'ammonium, l'hydrogenosulfate de sodium.

Selon le cas, il peut être nécessaire d'utiliser plutôt des bases, comme l'ammoniaque, l'hydroxyde de sodium, l'hydrogénocarbonate et le carbonate de sodium ou des bases azotées comme la méthylamine.

Des mélanges tampons, tels que le tampon acétate, composé d'acide acétique et d'acétate de sodium ou le tampon ammoniacal, composé d'ammoniaque et de chlorure d'ammonium conviennent également.

Nous décrivons plus en détail le procédé de synthèse.

La première étape du procédé consiste à réaliser le mélange réactionnel comprenant l'eau et les sources de gallium, de phosphore, éventuellement d'élément trivalent comme l'aluminium et d'élément tétravalent comme le silicium, d'anions fluorures, le structurant organique, éventuellement une source de cations complémentaire pour la compensation des charges de la charpente et les composés à effet acide ou basique.

Le structurant organique et les composés à effet acide ou basique sont généralement ajoutés en dernier pour permettre l'ajustement du pH à la valeur désirée.

La deuxième étape consiste en la cristallisation du gel formé. Elle s'effectue en chauffant ce gel à une température supérieure à 40°C, et en général comprise entre 40°C et 250°C et de préférence entre 60°C et 200°C sous pression autogène.

On utilise de préférence un récipient bouché en polypropylène pour les températures inférieures à 100°C. Pour les températures $\geqq$ 100°C on utilise un autoclave revêtu d'un matériau polymère, en général du polytétrafluoroéthylène.

La durée du chauffage nécessaire à la cristallisation dépend de la composition du gel et de la température. Elle varie entre quelques heures à 1 ou 2 jours.

La taille et la cinétique de formation des cristaux peuvent être modifiées par l'introduction dans le milieu réactionnel de germes constitués par des cristaux, éventuellement broyés, du précurseur ou du tamis moléculaire recherché.

Après cristallisation, le solide microporeux brut de synthèse est séparé par filtration ou centrifugation, lavé à l'eau distillée et séché à l'air vers 40°C par exemple. Le solide ainsi obtenu contient occlus dans ses cavités l'agent structurant organique, des anions fluorures et éventuellement des cations de compensation minéraux et de l'eau d'hydratation.

Pour être utilisé comme catalyseur de transformation des hydrocarbures ou adsorbant, il est nécessaire de libérer au moins une parties des pores et cavités du solide microporeux brut de synthèse. Ceci est réalisé par calcination du solide brut de synthèse à une température suffisante pour éliminer au moins une partie de l'agent structurant. La température de calcination est en général supérieure à 200°C et de préférence est comprise entre 350°C et 450°C.

L'identification des solides obtenus selon l'invention se fait de manière commode à partir de leur diagramme de diffraction des rayons X.

Ce diagramme de diffraction est obtenu à l'aide d'un diffractomètre en utilisant la méthode classique des poudres avec le rayonnement K du cuivre.

A partir de la position des pics de diffraction représentée par l'angle $2\Theta$, on calcule, par la relation de Bragg, les équidistances réticulaires $d_{hkl}$ caractéristiques de l'échantillon. L'estimation de l'erreur de mesure $(d_{hkl})$ sur $d_{hkl}$ se calcule par la relation de Bragg en fonction de l'erreur absolue $(2\Theta)$ affectée à la mesure de $2\Theta$. Une erreur absolue $(2\Theta)$ égale à $\pm 0,2°$ est communément admise. L'intensité relative $I_{rel}$ affectée à chaque valeur de $d_{hkl}$ est mesurée d'après la hauteur du pic de diffraction correspondant. Le dépouillement du diagramme de diffraction des rayons X présenté dans le tableau I est représentatif du diagramme de diffraction des précurseurs synthétisés.

TABLEAU I

| 2θ | d_hkl | I_rel |
|---|---|---|
| 7,2-7,5 | 12,3-11,8 | TF |
| 10,3-10,5 | 8,58-8,42 | m-F |
| 12,6-12,8 | 7,02-6,91 | f-m |
| 14,6-14,8 | 6,06-5,98 | f-mf |
| 16,3-16,5 | 5,43-5,37 | tf-f |
| 18,0-18,2 | 4,92-4,87 | tf |
| 20,8-21,0 | 4,27-4,23 | tf-f |
| 21,8-22,0 | 4,07-4,04 | tf |
| 22,1-22,3 | 4,02-3,98 | mf-m |
| 23,3-23,5 | 3,81-3,78 | tf |
| 24,4-24,6 | 3,64-3,62 | f-m |
| 26,6-26,8 | 3,35-3,32 | f-mf |
| 27,7-27,9 | 3,22-3,19 | tf-f |
| 28,4-28,6 | 3,14-3,12 | tf |
| 30,5-30,7 | 2,928-2,909 | f-mf |
| 31,4-31,6 | 2,846-2,829 | tf-f |
| 32,1-32,3 | 2,786-2,769 | tf-f |
| 33,8-34,0 | 2,649-2,635 | tf-f |
| 34,9-35,1 | 2,568-2,554 | tf-f |
| 35,5-35,7 | 2,526-2,513 | tf |
| 36,5-36,7 | 2,459-2,447 | tf |
| 37,2-37,4 | 2,415-2,402 | tf |
| 38,8-39,0 | 2,319-2,307 | tf |
| 45,1-45,3 | 2,009-2,000 | tf-f |
| 46,5-46,7 | 1,951-1,943 | tf |
| 48,4-48,6 | 1,879-1,872 | tf |
| 49,0-49,2 | 1,857-1,850 | tf |

Tf = très fort

F  = fort

m  = moyen

mf = moyen faible

f  = faible

tf = très faible

Les exemples suivants sont donnés à titre non limitatif pour illustrer l'invention.

## EXEMPLE 1

On dissout dans 3,7g d'eau distillée, 4,1g de sulfate de gallium hydraté (le rapport molaire $H_2O/Ga_2(SO_4)_3$ est proche de 25). Le sulfate est obtenu par dissolution à chaud de gallium, (Grade 1 de Johnson Matthey), dans $H_2SO_4$ concentré, en excès, reprise à température ordinaire de la suspension obtenue par l'éthanol à 60% dans l'eau, reprécipitation, dans cette solution refroidie, du sulfate de gallium hydraté par addition d'éther puis filtration et séchage ménagé. On ajoute sous agitation 1,15g d'acide phosphorique à 85% (Prolabo) puis 0,25g d'acide fluorhydrique à 40% (Fluka) et enfin 4,55g de di-n-propylamine (Fluka), abrégée DPA par la suite. On continue l'agitation pendant 15 minutes environ.

Le pH est alors de 6.

La composition molaire du mélange final est la suivante :

9 DPA : 1 $Ga_2O_3$ : 1 $P_2O_5$ : 1HF : 70 $H_2O$

Le gel est transversé dans un autoclave muni d'une chemise en polytétrafluroéthylène et chauffé à 140°C pendant 24h. Après refroidissement, le solide est filtré, lavé à l'eau distillée est séché vers 40°C.

L'observation au microscope optique et au microscope électronique à balayage (MEB) montre des cristaux sous forme de cubes, en général isolés, de 2 à 10 micromètres d'arête. L'analyse par diffraction des rayons X du précurseur brut de synthèse montre qu'il s'agit d'une phase de type structural LTA dont le diagramme de diffraction correspond à celui du tableau I.

L'analyse chimique du solide donne la composition pondérale suivante en % :

C : 11,30 ; N : 2,05 ; F : 2,55 ; Ga : 29,35 ; P : 14,22

La formule chimique correspondante pour la forme anhydre est la suivante :

$$DPA_{0,17} (Ga_{0,48} P_{0,52})O_2 F_{0,15}$$

Les pertes de masse mesurées par thermogravimétrie par chauffage sous courant d'argon jusqu'à 380°C sont les suivantes :

$H_2O$      DPA + F

5,9 %      20,7 %

La capacité d'adsorption en n-hexane a été déterminée à l'aide d'une électrobalance sur l'échantillon calciné in-situ sous pression réduite (1 mbar) à 380°C pendant 2h. A 23°C et p/po de n-hexane de 0,5, la capacité d'adsorption mesurée est de 0,148g de n-hexane par gramme de solide calciné, soit une porosité de 0,22cm$^3$ par gramme.

## EXEMPLE 2

Cet exemple illustre le rôle primordial des ions fluorures dans le milieu de synthèse pour l'obtention du type structural LTA.

Un essai a été réalisé en absence d'ions fluorure dans les conditions de l'exemple 1.

L'observation au microscope optique et au MEB du solide cristallisé obtenu montre des cristaux prismatiques hexagonaux de taille 100 micromètres x 100 micromètres environ. Le diagramme de diffraction des rayons X obtenu est donné dans le tableau II.

Il est semblable au diagramme de diffraction des rayons X du solide microporeux noté GaPO$_4$-a du brevet européen 226219.

TABLEAU II

| 2θ | $d_{hkl}$(Å) | $I_{rel}$ |
|---|---|---|
| 8,24 | 10,71 | 100 |
| 9,79 | 9,03 | 6 |
| 10,55 | 8,38 | 37 |
| 13,37 | 6,61 | 1 |
| 14,30 | 6,18 | 5 |
| 15,21 | 5,82 | 1 |
| 16,54 | 5,36 | 3 |
| 17,34 | 5,11 | 4 |
| 17,86 | 4,96 | 4 |
| 19,63 | 4,52 | 5 |
| 20,94 | 4,24 | 3 |
| 21,89 | 4,06 | 8 |
| 22,52 | 3,94 | 8 |
| 22,73 | 3,91 | 7 |
| 24,84 | 3,58 | 5 |
| 26,47 | 3,36 | 3 |
| 26,93 | 3,31 | 3 |
| 28,76 | 3,10 | 4 |
| 29,25 | 3,05 | 2 |
| 29,97 | 2,979 | 3 |
| 30,64 | 2,915 | 3 |
| 31,87 | 2,805 | 4 |
| 33,37 | 2,682 | 2 |
| 33,78 | 2,651 | 4 |
| 36,67 | 2,448 | 2 |
| 40,25 | 2,238 | 3 |
| 42,52 | 2,124 | 1 |
| 45,63 | 1,986 | 1 |
| 47,51 | 1,912 | 1 |

## EXEMPLE 3

On opère comme dans l'exemple 1, mais le gel est chauffé en autoclave à 200°C pendant 6 heures. L'observation du solide au microscope optique montre des cristaux sous forme de cubes de 1 micromètre d'arête environ.

Le diagramme de diffraction des rayons X du produit brut de synthèse correspond à celui du tableau I.

## EXEMPLE 4

La composition du mélange réactionnel est identique à celle de l'exemple 1. Le pH du mélange avant chauffage est de 4,55.

Le gel est transvasé en flacon de polypropylène à bouchon vissé, puis chauffé à 80°C pendant 36h.

Après chauffage le solide est entièrement cristallisé sous forme de cubes; son diagramme de diffraction des rayons X correspond à celui du tableau I.

## EXEMPLE 5

Cet exemple montre que l'abaissement du pH à sa limite inférieure conduit à des cristaux de grande taille.

On dissout 4,077g de sulfate de gallium hydraté dans 3,64g d'eau distillée, on ajoute sous agitation 1,15g d'acide phosphorique (85%), puis 0,665g de HF (40%) et enfin 3,36g de di-n-propylamine. Le pH du mélange homogénéisé est de 3. La composition du mélange réactionnel est la suivante :

$$6,66 \text{ DPA} : 1 \text{ Ga}_2\text{O}_3 : 1 \text{ P}_2\text{O}_5 : 2,66 \text{ HF} : 65\text{H}_2\text{O}$$

On chauffe comme dans l'exemple 1 en autoclave à 140°C pendant 24heures.

Après cristallisation (pH final = 2,5), le solide est filtré, lavé à l'eau distillée et séché vers 40°C. La taille des cristaux cubiques obtenus est de 8 à 80 micromètres. Le spectre de diffraction des rayons X correspond à celui du tableau I.

## EXEMPLE 6

Préparation d'un silicogallophosphate de type structural LTA.

Dans cette préparation, on utilise une silice colloïdale, commercialisée sous le nom de Ludox AS 40. Sa composition chimique en poids est de 41,6% $SiO_2$ et 58,4% $H_2O$.

Les sources de gallium, de phosphore, de fluorure et d'agent structurant organique sont par ailleurs les mêmes que dans l'exemple 1.

On dissout 4,58g de sulfate de gallium hydraté dans 2,92g d'eau distillée, on ajoute 0,722g de Ludox AS 40 puis 4,97g de di-n-propylamine. Après homogénéisation, on additionne à la préparation 1,15g d'acide phosphorique à 85% et 0,665g d'acide fluorhydrique à 40%.

La composition chimique molaire du mélange réactionnel est :

$$9,82 \text{ DPA} : 1 \text{ Ga}_2\text{O}_3 : 1 \text{ P}_2\text{O}_5 : 1 \text{ SiO}_2 : 2,66\text{HF} : 65\text{H}_2\text{O}$$

Le gel pâteux obtenu après agitation (pH=4,5) est placé dans le même type d'autoclave que précédemment puis porté à 140°C pendant 24h.

Après réaction (pH final = 4), le solide entièrement cristallisé est filtré, lavé et séché à 40°C. On obtient 1,5g de cristaux cubiques de 40 à 50 micromètres. Le diagramme de diffraction des rayons X correspond à celui du tableau I.

L'analyse chimique de Ga, P et Si dans les cristaux, effectuée à l'aide d'un microscope électronique à balayage, équipé d'un spectomètre X à dispersion d'énergie, conduit à la formule suivante ramenée à un tétraèdre de charpente :

$$(\text{Si}_{0,035} \text{ Ga}_{0,517} \text{ P}_{0,448})\text{O}_2$$

## EXEMPLE 7

Cet exemple illustre la possibilité de préparer par abaissement du pH un silicogallophosphate de type LTA dont les cristaux cubiques ont des dimensions de l'ordre de 130micromètres.

On dissout 4,077g de sulfate de gallium hydraté dans 2,92g d'eau. On ajoute 0,722g de Ludox à (41,6% $SiO_2$) puis 3,37g de di-n-propylamine.

Après homogénéisation on additionne 1,15g d'acide phosphorique à 85% et 0,66g d'acide fluorhydrique à 40%.

La composition molaire du mélange réactionnel est dans ce cas la suivante :

$$6,66 \text{ DPA} : 1\text{Ga}_2 \text{O}_3 : 1\text{P}_2\text{O}_5 : 1\text{SiO}_2 : 2,66 \text{ HF} : 65\text{H}_2\text{O}$$

Après agitation, le gel obtenu (pH=3,5) est chauffé en autoclave à 140°C pendant 23 heures.

Après réaction, le pH est proche de 2 et le solide recueilli est constitué de deux phases :

    – un composé majoritaire de structure LTA dont les cristaux cubiques ont des dimensions de l'ordre de 130 micromètres.

    – un composé minoritaire, non identifié dont les cristallites (fibrilles) ont des dimensions de l'ordre de 5 micromètres x 60 micromètres.

Le rapport molaire Si / (Si+Ga+P) des cristaux déterminé par analyse à la microsonde électronique est de l'ordre de 0,026.

## EXEMPLE 8

Préparation d'un aluminogallophosphate de type structural LTA.

Dans cet exemple, une partie de la source de gallium est remplacée par une source d'aluminium ($Al_2(SO_4)_3$, 18 $H_2O$ de Prolabo).

On dissout 3,67g de sulfate de gallium hydraté dans 3,76g d'eau, on ajoute 0,666g de sulfate d'aluminium puis 4,55g de di-n-propylamine.

Après homogénéisation, on additionne 1,15g d'acide phosphorique (85%) et 0,25g d'acide fluorhydrique (40%).

La composition molaire du mélange réactionnel est :

$$9\text{DPA} : 0,8 \text{ Ga}_2\text{O}_3 : 0,2\text{Al}_2\text{O}_3 : 1\text{P}_2\text{O}_5 : 1\text{HF} : 70\text{H}_2\text{O}$$

Après agitation, le gel obtenu (pH : 4,5-5) est placé dans le même type d'autoclave que précédemment et porté à 140°C pendant 20h.

Après réaction (pH final=4), le solide obtenu est lavé à l'eau distillée vers 40°C. Il est constitué de cristaux cubiques de types LTA de 80 micromètres environ et d'une phase de type quartz. L'analyse des cristaux cubiques au microscope électronique à balayage muni d'un spectromètre d'analyse X conduit à la formule de charpente :

$$(Ga_{0,45}\ Al_{0,05}\ P_{0,5})O_2$$

## Revendications

**1 -** Solide microporeux synthétique cristallisé renfermant du gallium et du phosphore caractérisé en ce que dans sa forme brute de synthèse anhydre il correspond à la formule générale :

$$S_s\ (Ga_g\ P_p\ X_x\ Y_y)\ O_2\ F_f\ \text{où}$$

S représente l'agent structurant organique
- X représente un élément trivalent
- Y représente un élément tétravalent
- s, g, p, x, y et f représentent les nombres de moles pour deux moles d'atome oxygène de valeur:

$0,01 \leqq s \leqq 0,2$

$0,1 \leqq g \leqq 0,5$

$0,2 \leqq p \leqq 0,5$

$0 \leqq x \leqq 0,4$

$0 \leqq y \leqq 0,3$

$0,1 \leqq f \leqq 0,2$

avec $g + p + x + y = 1$

et en ce que la structure cristalline est du type LTA.

**2 -** Solide selon la revendication 1 caractérisé en ce que s est compris entre 0,05 et 0,17.

**3 -** Solide selon la revendication 1 ou 2 caractérisé en ce que g est compris entre 0,35 et 0,5.

**4 -** Solide selon l'une des revendications 1 à 3 caractérisé en ce que p est compris entre 0,4 et 0,5.

**5 -** Solide selon l'une des revendications 1 à 4 caractérisé en ce que x est compris entre 0 et 0,1.

**6 -** Solide selon l'une des revendications 1 à 5 caractérisé en ce que y est compris entre 0 et 0,1.

**7 -** Solide selon l'une des revendications 1 à 6 caractérisé en ce que f est compris entre 0,12 et 0,17.

**8 -** Solide selon l'une des revendications 1 à 7 caractérisé en ce que l'élément trivalent X est l'aluminium.

**9 -** Solide selon l'une des revendications 1 à 8 caractérisé en ce que l'élément tétravalent Y est le silicium.

**10-** Solide selon l'une des revendications 1 à 9 caractérisé en ce que son diagramme de diffraction des rayons X comporte au moins les valeurs de $d_{hkl}$ données dans le tableau I.

**11-** Solide selon l'une des revendications 1 à 10 caractérisé en ce que l'agent structurant organique est une amine, de préférence une amine secondaire.

**12-** Solide microporeux caractérisé en ce qu'il est obtenu par calcination du solide selon l'une des revendications 1 à 11 à une température suffisante pour éliminer au moins une partie de l'agent structurant.

**13-** Solide selon la revendication 12 caractérisé en ce que la température de calcination est supérieure à 200°C et de préférence est comprise entre 300 et 450°C.

**14-** Solide selon les revendications 12 ou 13 caractérisé en ce que sa capacité d'adsorption est de 0,148g de n-hexane par gramme et sa porosité au moins égale à $0,22cm^3g^{-1}$.

**15-** Utilisation du solide selon l'une des revendications 12 à 14 comme catalyseur de transformation d'hydrocarbures et adsorbant.

**16-** Procédé de synthèse d'un solide microporeux selon l'une des revendications 1 à 11 caractérisé en ce qu'on réalise un mélange réactionnel renfermant de l'eau, une source de gallium, une source de phosphore, un agent structurant organique, on chauffe ce mélange à une température $\geqq 40$°C sous pression autogène pendant une durée suffisante pour effectuer la cristallisation, puis on sépare le solide cristallisé, se caractérisant en ce que le mélange réactionnel renferme une source d'anions fluorure.

**17-** Procédé selon la revendication 16 caractérisé en ce que le mélange réactionnel renferme une source d'élément trivalent X.

**18-** Procédé selon la revendication 16 ou 17 caractérisé en ce que le mélange réactionnel renferme une source d'élément tétravalent Y.

**19-** Procédé selon l'une des revendications 16 à 18 caractérisé en ce que la composition molaire du mélange réactionnel correspond à

$s'S : Ga_2O_3 : p'P_2O_5 : x'X_2O_3 : y'YO_2 : f'F : hH_2O$ où
- s' varie entre 1 et 10 et de préférence entre 5 et 10
- p' varie entre 0,1 et 1 et de préférence entre 0,5 et 1

– x′ varie entre 0 et 1 et de préférence entre 0 et 0,5

– y′ varie entre 0 et 1,5 et de préférence entre 0 et 1

– f′ varie entre 0,1 et 4 et de préférence entre 1 et 3

– h′ varie entre 10 et 500 et de préférence entre 30 et 100.

**20-** Procédé selon l'une des revendications 16 à 19 caractérisé en ce que la source d'anions fluorure est l'acide fluorhydrique ou ses sels formés avec des métaux alcalins, l'ammonium, ou l'agent structurant organique, ou un composé hydrolysable comme le fluorosilicate d'ammonium, de sodium ou le tétrafluorure de silice.

**21-** Procédé selon la revendication 20 caractérisé en ce que la source d'anions fluorure est l'acide fluorhydrique.

**22-** Procédé selon l'une des revendications 16 à 21 caractérisé en ce que la source de gallium est un oxyde ou hydroxyde de gallium.

**23-** Procédé selon l'une des revendications 16 à 21 caractérisé en ce que la source de gallium est un dérivé organique du gallium comme les alkoxydes de gallium.

**24-** Procédé selon l'une des revendications 16 à 21 caractérisé en ce que la source de gallium est un sel de gallium comme le fluorure, le phosphate ou le sulfate de gallium, de préférence le sulfate de gallium.

**25-** Procédé selon l'une des revendications 16 à 24 caractérisé en ce que la source de phosphore est l'acide phosphorique, ou ses sels et esters comme les phosphates alcalins, les phosphates de gallium ou les phosphates d'alkyle, de préférence de l'acide phosphorique.

**26-** Procédé selon l'une des revendications 16 à 25 caractérisé en ce que l'élément trivalent est l'aluminium.

**27-** Procédé selon la revendication 26 caractérisé en ce que la source d'aluminium est un oxyde, hydroxyde ou alkoxyde d'aluminium comme la boehmite, le pseudoboehmite et l'alumine gamma, ou sel d'aluminium, comme le phosphate d'aluminium, le sulfate d'aluminium ou l'aluminate de sodium, de préférence le sulfate d'aluminium.

**28-** Procédé selon l'une des revendications 16 à 27 caractérisé en ce que l'élément tétravalent est le silicium.

**29-** Procédé selon la revendication 28 caractérisé en ce que la source de silicium est un oxyde de silicium sous forme d'hydrogel, aérogel ou de suspension colloïdale, de préférence de suspension colloïdale de silice.

**30-** Procédé selon la revendication 29 caractérisé en ce que le silice provient de l'hydrolyse d'esters comme l'orthosilicate d'éthyle ou de complexes comme le fluorosilicate d'ammonium ou de sodium ou de la précipitation à partir de silicates.

**31-** Procédé selon l'une des revendications 16 à 30 caractérisé en ce que l'amine secondaire est une dialkylamine.

**32-** Procédé selon la revendication 31 caractérisé en ce que les chaînes alkyles comportent 2 à 4 atomes de carbone et de préférence 3 atomes de carbone.

**33-** Procédé selon l'une des revendications 16 à 32 caractérisé en ce que le pH du mélange réactionnel est entre 2 et 8 et de préférence entre 3 et 8.

**34-** Procédé selon l'une des revendications 16 à 33 caractérisé en ce que le pH du mélange réactionnel est ajusté par l'addition d'acides, comme l'acide chlorhydrique, sulfurique ou acétique, de sels acides comme l'hydrogénofluorure d'ammonium, l'hydrogénosulfate de sodium ou de bases, comme l'ammoniaque, l'hydroxyde de sodium, l'hydrogénocarbonate ou le carbonate de sodium et des bases azotées comme le méthylamine ou bien des mélanges tampon acétate ou ammoniacal.

**35-** Procédé selon l'une des revendications 16 à 34 caractérisé en ce qu'on chauffe le mélange réactionnel à une température comprise entre 40 et 250°C et de préférence entre 60 et 210°C pendant une durée suffisante pour effectuer la cristallisation.

**Office européen des brevets**

# RAPPORT DE RECHERCHE EUROPEENNE

Numero de la demande

EP    92 40 0238

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0 147 991 (MOBIL OIL CORP.) <br> * revendications 1-5,7,8 * <br> --- | 1,16 | C01B25/37 <br> C01B25/45 |
| A | US-A-4 786 487 (KUEHL) <br> * revendication 1 * <br> --- | 16 | |
| A | EP-A-0 187 308 (UNION CARBIDE CORP.) <br> * page 6, ligne 23 - page 7, ligne 20 * <br> --- | 1 | |
| A | PATENT ABSTRACTS OF JAPAN <br> vol. 5, no. 58 (C-51)(730) 21 Avril 1981 <br> & JP-A-56 009 206 ( TOKYO SHIBAURA DENKI K.K. ) <br> 30 Janvier 1981 <br> * abrégé * <br> --- | 16 | |
| A,D | EP-A-0 226 219 (UNION CARBIDE CORP.) <br> * revendications 1-4,9,10 * <br><br> ----- | 1,16 | |

|  |
|---|
| **DOMAINES TECHNIQUES RECHERCHES (Int. Cl.5 )** |
| C01B <br> B01J <br> C01G |

Le présent rapport a été établi pour toutes les revendications

| Lieu de la recherche | Date d'achèvement de la recherche | Examinateur |
|---|---|---|
| BERLIN | 12 MAI 1992 | CLEMENT J-P. |

11